# EUROPEAN PATENT SPECIFICATION

(11) **EP 2 632 678 B1**
(45) Date of publication and mention of the grant of the patent: **13.03.2019**
(21) Application number: 11779841.3
(22) Date of filing: 21.10.2011
(51) Int. Cl.: B29C 44/60, B29C 44/34, B29C 35/08, B29C 44/42

(54) **METHODS AND APPARATUS FOR PROCESSING POLYMERS**
VERFAHREN UND VORRICHTUNG ZUR VERARBEITUNG VON POLYMEREN
PROCÉDÉS ET APPAREIL DE TRAITEMENT DE POLYMÈRES

(30) Priority: 10.05.2011 GB 201107769; 25.10.2010 GB 201017953
(43) Date of publication of application: 04.09.2013
(73) Proprietor: The R & D Factory Ltd, Deeside, Flintshire CH5 2HW (GB)
(72) Inventor: WOODWORTH, Peter, Flintshire CH5 4GL (GB)
(74) Representative: D Young & Co LLP
(86) International application number: PCT/GB2011/052048
(87) International publication number: WO 2012/056221

(56) References cited:
- EP-A1- 2 033 758
- JP-A- 2004 090 412
- US-A1- 2002 091 168
- US-A1- 2004 009 250
- US-A1- 2005 077 641
- US-A1- 2008 067 719
- US-A1- 2009 212 458

## Description

### BACKGROUND OF THE INVENTION

This invention relates to methods and apparatus for processing polymers to make moulded or extruded parts.

Foaming, blowing or expanding of polymer is a common technique for producing lighter weight and lower cost items. To do this, an agent is mixed with the polymer. It is known to use a wide variety of polymers and agents for foaming, blowing and expanding. The polymers may be man made polymers or natural polymers, wherein man made polymers include polyethylene (PE), polystyrene (PS) and polypropylene (PP), and natural polymers include rubber. Agents in both liquid and gas form are used, including various forms of chemical foaming agent and also water. Some known examples of foaming or blowing agent and combinations of such agents with specific polymers are as follows:
- Sodium bicarbonate is an endothermic blowing agent for polyethyline (PE) films.
- Azodicarbonamide is an exothermic blowing agent for PE blown films, and high density (HD) polypropyline (PP) injection moulding.
- Sulphonyl hydrazides are exothermic chemical blowing agents for rubber. Toluene sulphonyl hydrazide (TSH) are suitable for epoxy foams, rubber cloth laminates, sponge rubber and slipper soles.
- Oxybis (benzenesulfonylhrazide) (OBSH) can be used for co-axial cables, ethylenepropylene-diene-monomer (EPDM) profiles, light colour polyvinyl chloride (PVC) footwear, and micro-cellular rubbers.
- Semicarbazides are exothermic chemical blowing agents for high temperature processing for injection moulded polystryrene (PS), poly(p-phenylene oxide (PPO), high impact PS, poly(Acrylonitrile, Butadiene, Styrene) (ABS), PP, HD-PE and rigid PVC.
- Isobutyronitrile is used for thick section PVC foams and low temperature processing of silicone rubber.
- Cyanuric chloride-sodium carbonate can be used as a blowing agent in rubber to make sponges, either when heated in a dry state, in liquid paraffin, in tricresyl phosphate, or in dibutyl phthalate.
- Cyclopentane is known as a foaming agent.
- Nitrogen gas, butane gas and carbon dioxide have also been used as blowing agents.
- Water

In the following, we use the term foaming agent generically to encompass references in the literature to blowing agents and expanding agents as well as foaming agent.

Each polymer is specified by the polymer manufacturer to have a temperature range within which the polymer is workable, or more precisely, several overlapping temperature ranges which the polymer should lie within at various stages during the processing as it passes through a conventional barrel-and-screw type moulding machine into a nozzle and thence into a mould or extrusion line. Typically, the temperature ranges will span a range from about 200°C to 300°C.

When the polymer is mixed with a foaming agent, it not only foams but also cools down considerably, for example by 60°C. The cooling may be a gradual or rapid process and is often dependent upon the foaming agent's temperature and its reactive nature. If the foaming agent temperature is significantly lower than the temperature of the melted polymer, e.g. at ambient temperature, the overall temperature of the foamed polymer drops rapidly. As a result of cooling, the melted polymer and water mixture becomes viscous, and less reactional and as a result less able to expand. In some instances the temperature drop is sufficient to harden the polymer within the machine and as a result uneven pressures and unsatisfactory mixing occurs. To avoid these problems, it is known to lengthen the barrel-and-screw to allow for heat recovery after mixing. However, making the barrel-and-screw longer is not desirable for cost reasons, and also has the effect of lengthening the processing time by adding a heat recovery phase after mixing. Prolonging the overall processing time limits throughput, i.e. per part production time.

US 2005/0077641 A1 discloses apparatus for the manufacture of foamed polymer trim parts using physical blowing agents. A statical mixing device is enclosed in a pressure chamber, which comprises a hollow porous cylinder, which has a surface suitable for contacting the melt with the blowing agent. Protrusions extending at least partially into the melt flow cause a multiple reorganisation of the polymer melt, which leads to thorough mixing and shortens the diffusion path. Heating elements are provided for red letting the temperature of the polymer melt in the cylinder.

US 2009/212458 A1 discloses a method and apparatus for forming an article from mouldable material. A mouldable material, such as a thermoplastic is heated until it is molten and is fed into an injector of an injection moulding apparatus. A liquid, such as water, is introduced into the stream of molten plastic. Because the molten plastic is at a temperature above the boiling point of the water, the water will boil and will expand the plastic material forming a honeycomb structure of bubbles that remains once the material has cooled.

### SUMMARY OF THE INVENTION

According to a first aspect of the invention there is provided a system for injection moulding of polymer parts according to claim 1.

After the first cycle, the controller sets the additional amount of heat adaptively with reference to a measurement of mixing-induced heat loss during the previous cycle. This allows the system to self learn and stabilize in a very simple but effective manner such that it delivers a transient heat pulse each cycle to compensate for the mixing-induced heat loss either before or during mixing - typically over a period that starts before mixing and ends some time during mixing.

The self learning and stabilization may be hastened if, for the first cycle, the controller sets the additional amount of heat to a pre-set value, rather than simply not applying any additional heat during the first cycle.

The nozzle may further include a temperature sensor located to measure mixing chamber temperature and connected to the controller. Readings taken by the temperature sensor may be used by the controller to ensure that desired temperature profiles are accurately applied, for example a desired temperature ramp when applying the additional amount of heat, or a desired constant temperature is maintained during other parts of the cycle, e.g. during cooling of the part in the mould. In other words, the readings of the temperature sensor in the current cycle can be used for controlling temperature within that cycle as well as using the temperature profile from the previous cycle to determine the temperature ramp to be applied transiently in the current cycle.
If the nozzle is provided with a temperature sensor located to measure mixing chamber temperature and connected to the controller, then, after the first cycle, the measurement of mixing-induced heat loss can be based on changes in temperature in the nozzle as measured by the temperature sensor. In more sophisticated embodiments, multiple temperature sensors may be provided at different locations in the nozzle, and the additional heat may take account of the associated temperature readings from multiple locations.
According to a second aspect of the invention there is provided a method for injection moulding of polymer parts according to claim 4.

After the first cycle, the additional amount of heat is preferably set adaptively with reference to a measurement of mixing-induced heat loss during the previous cycle. For the first cycle, the additional amount of heat preferably has a pre-set value. After the first cycle, the measurement of mixing-induced heat loss is preferably based on measured changes in temperature in the nozzle. The liquid foaming agent can be water or another known liquid foaming agent, such as those prior art agents listed further above in the introduction.

The additional amount of heat is preferably delivered such that, before and/or during mixing, the polymer's temperature in the nozzle is transiently elevated above the temperature it has during the remainder of the cycle. Alternatively, the additional heating may be delivered during, and optionally also immediately after, mixing to mostly or partly reduce the temperature drop that would otherwise occur as a result of mixing.

In any case, the additional amount of heat is preferably applied so as to ensure that the polymer in the nozzle is maintained above the bottom of its operating temperature range throughout. The operating temperature range is that specified by the polymer manufacturer, or the equivalent temperature range determined on the actual moulding machine by the operator during set up.

### BRIEF DESCRIPTION OF THE DRAWINGS

This invention will now be further described, by way of example only, with reference to the accompanying drawings.
Figure 1 is a schematic side view of a barrel-and-screw moulding machine fitted with a water foaming nozzle according to a first embodiment of the invention.
Figure 2 is a schematic side view of a moulding system incorporating the moulding machine of Figure 1 additionally showing a control unit, water supply unit and mould housing.
Figure 3 is a schematic drawing of the water supply unit of Figure 2.
Figure 4A is an axial section through the nozzle of Figure 1.
Figure 4B is an enlarged view of Figure 4A showing the water injection path in bold.
Figure 5 is a schematic drawing of the controllers and associated connections.
Figure 6 is a wheel diagram showing an injection moulding cycle according to the first embodiment.
Figure 7 is a schematic graph showing the polymer injection phase in more detail.
Figure 8A is an axial section of an alternative embodiment of the nozzle using a different design of valve unit.
Figure 8B is a section B-B through Figure 8A.
Figure 8C is an enlarged cross-section through the valve unit of Figure 8A.
Figure 9 is a schematic drawing of a moulding system according to a second embodiment of the invention.
Figure 10 is a table of some suitable polymers and their specified operating temperature ranges.

### DETAILED DESCRIPTION

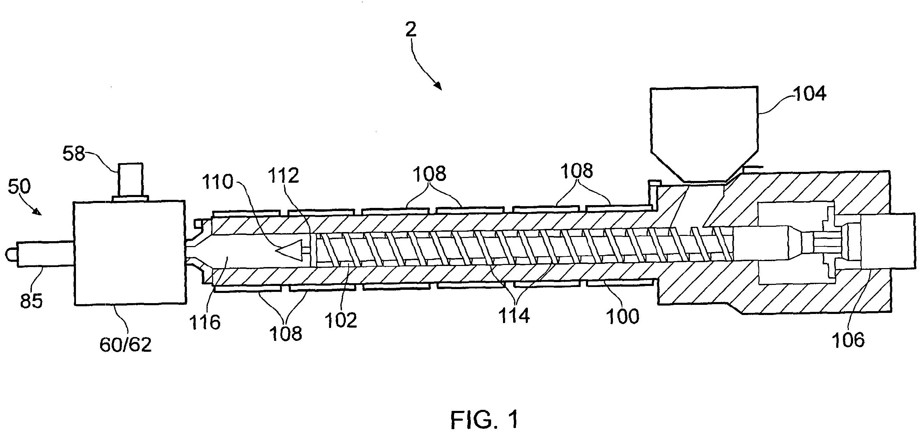

Figure 1 is a schematic side view of a barrel-and-screw moulding machine 2 fitted with a water foaming nozzle 50 according to a first embodiment of the invention.

The barrel-and-screw design is conventional with a material hopper 104 arranged to gravity feed polymer granules or pellets into one end of a screw 102. The screw 102 is driven in use so that its flights 114 urge the polymer granules along the barrel 100 through a succession of heating elements, or bands, 108 which are each operated to maintain successively higher temperatures along the path (from right to left in the figure) causing the polymer granules to gradually melt into a workable melted polymer mass as they progress through the machine. The screw 102 terminates in a conical tip 110. A slidable check ring 112 is also arranged adjacent the tip 110. In its equilibrium position, the check ring leaves a ring-shaped path between its inner surface and the outer surface of the screw for molten polymer to pass into a polymer charging chamber 116. To inject a dose of polymer into the nozzle 50, the screw 102 is urged by a hydraulic ram 106 to the right in the figure, this causes the check ring 112 to slide up the screw to a larger diameter part of the screw and thereby seal the polymer collection chamber 116 so that continued urging of the screw forces melted polymer into the nozzle 50. The basic structural features of the nozzle are its main body 60 and coupling piece 62, a valve unit 58 for injecting pressurised water into the nozzle to promote foaming, and a tip portion 85 through which foamed polymer is expelled into the mould or extrusion line (not shown). The nozzle 50 is described in more detail below.

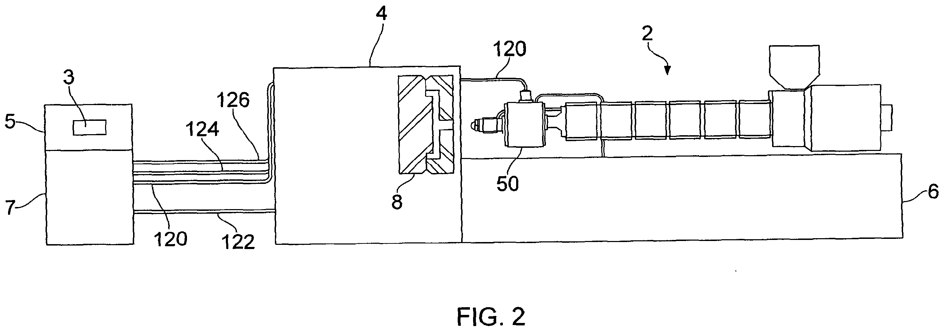

Figure 2 is a schematic side view of a moulding system incorporating the moulding machine 2 of Figure 1. The moulding machine 2 is mounted on a main bed 6 adjacent to a mould housing 4 in which a mould 8 is mounted. A control and water supply cabinet is provided to house the water supply unit 7 and the injection controller 5. The controller 5 includes a man-machine interface 3 having a display and input keys or buttons. Various lines are shown connecting the control and water supply cabinet 5, 7 to the mould 4 and moulding machine 2. The connections include:
- a pressurised water feed line 120 to the foaming nozzle 50
- a trigger line 122 indicating the status of the mould 8 to the injection controller 5
- temperature sensing lines 124 from the moulding machine 2 to the injection controller 5
- heater control lines 126 from the water injection controller 5 to the heaters in the nozzle 50.

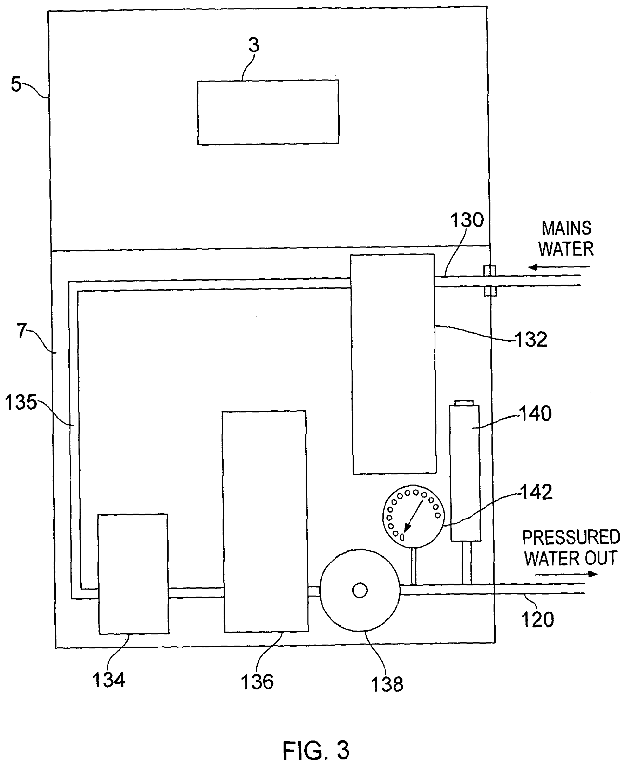

Figure 3 is a schematic drawing of the control and water supply cabinet of Figure 2 which houses the water supply unit 7 and the injection controller 5 including man-machine interface 3. The water supply unit 7 has an input line 130 for receiving water from a mains supply or other water supply. Alternatively, a water bottle or water tank may be incorporated as part of the unit 7, for example as a docking station based on a conventional office water cooler. The water is passed through a filter 132 to a pump 134 via a water line 135 where it is pressurised. Pressurised water is retained downstream of the pump 134 in an accumulator 136 which leads to an electrically actuated water dispensing valve 138 which may be a diaphragm valve for example. A pressure relief valve 140 is also fitted between the accumulator 136 and the water dispensing valve 138. Downstream of the water dispensing valve 138 a pressure line 120 leads to the nozzle injector. A pressure gauge 142 is fitted to measure the pressure in the pressure line 120.

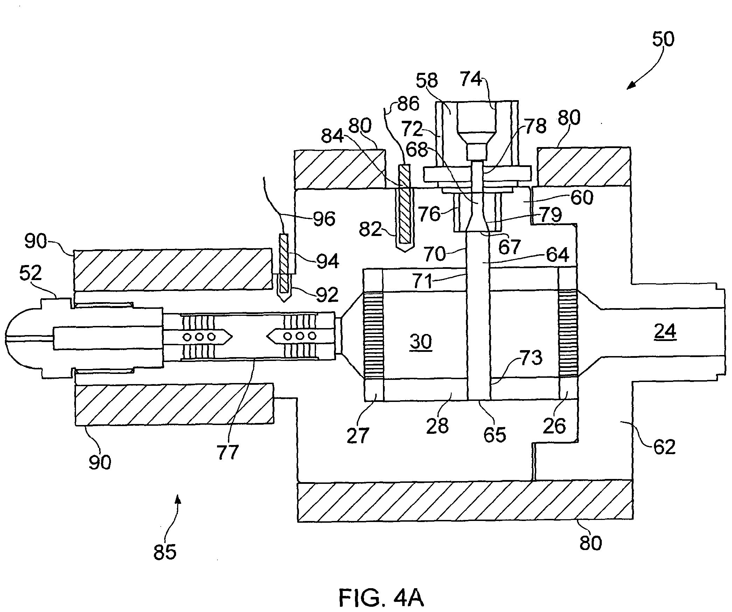

Figure 4A is an axial cross-section through a die head or foaming nozzle 50 according to a first embodiment of the invention. The die head 50 is suitable for use in both an injection moulding process and an extrusion process.

The nozzle comprises a nozzle body 60 which is made of a suitable steel such as stainless steel. The nozzle body is shaped to form a cylindrical chamber 30 in which the polymer is foamed during use. On the polymer input side of the nozzle 50, a coupling piece 62 of steel is arranged in abutting contact with an end surface of the nozzle body 60 and forms a chamber entrance 24 which is a conduit for input of polymer material into the die head. The nozzle body 60 and coupling piece are bolted together. The coupling piece 62 is dimensioned to allow it to fit the moulding machine which it is intended to be used with. Different coupling pieces can therefore be supplied with a single die head to allow the die head to be used with a variety of moulding machines. A collar-shaped spacer 28 is arranged to line the inner arcuate surface of the nozzle body and separates an inlet-side melt stream forming disk 26 from an outlet-side melt stream forming disk 27. Each disk 26, 27 is a circular element made of steel perforated with through holes of, for example, 1 mm to 2 mm in diameter. The through holes may be tapered with larger diameter on the input side or may have uniform diameter. Melt stream forming disk is designed to form miniature melt streams from a single melt stream. Its secondary function is to orientate the mixture and or melt streams for the addition of foaming agent. The distance between the melt stream forming disks 26, 27 defined by the spacer 28 is chosen to allow efficient foaming agent attack of the polymer to achieve the desired expansion and foaming. The melt stream forming disk 26 outputs multiple thin stranded melt streams into the mixing chamber 30, which present a large surface area for reaction with the foaming agent. The collar spacer 28 also has a vertically arranged upper and lower through holes 71 and 73 for accommodating a dowel pin 64. The base 65 of the dowel pin 64 rests on the bottom surface of the chamber and the pin extends vertically upward through the through hole in the collar and into an accommodating bore 70 machined vertically upward from the top surface of the chamber 30 part way into the nozzle body 60. The portion of the pin 64 that traverses the mixing chamber 30 also acts as a central agitator in the mixing process.

The outlet side of the nozzle is formed by a tip portion 85 which defines a static mixing chamber, or static mixer 77, which is effectively part of the outlet path arranged downstream of the main mixing chamber 30 after the outlet-side forming disk 27 and an interconnecting tapered portion. The static mixer is designed to blend the water-expanded foam by compression and agitation prior to release. The static mixer is further able to hold foaming pressure during the period during which the mould is being closed. The static mixer leads to a nozzle tip 52 through which the foamed polymer material is ejected into a subsequent mould or extrusion line. The nozzle tip may be a standard piece or custom built.

A valve body 58 is screwed into a threaded hole 76 in the top surface of the nozzle body 60 coaxially with the pin 64 and bore 70. The valve body 58 has an upper thread 72 for receiving a threaded closure of a pressurised water line (not shown). When a water line is fitted, the water is in fluid communication with an inlet hole 74 in the valve body 58 which leads via a taper into a smaller diameter hole 78 which has a flared lower portion 79 to receive a tappet 68. The tappet 68 forms a valve by being arranged to have a limited vertical freedom of movement before abutting the upper surface 67 of the pin 64, wherein the freedom of movement is defined by a tolerance dimension of the order of 0.01 to 0.03 mm at usual operating temperatures, i.e. typically 200 - 300 C for most polymers. The injecting action is described in more detail below.

The nozzle body 60 and coupling piece 62 are enveloped by a resistive heating element or band 80 which is shown with diagonal hatching. A temperature sensor 84 is accommodated in a bore 82 in the nozzle body 60 and has an electrical lead 86 leading to the injection controller.

The nozzle tip portion 85 is enveloped by a resistive heating element or band 90 which is shown with diagonal hatching. A temperature sensor 94 is accommodated in a bore 92 in the nozzle tip portion 85 and has an electrical lead 96 leading to the injection controller.

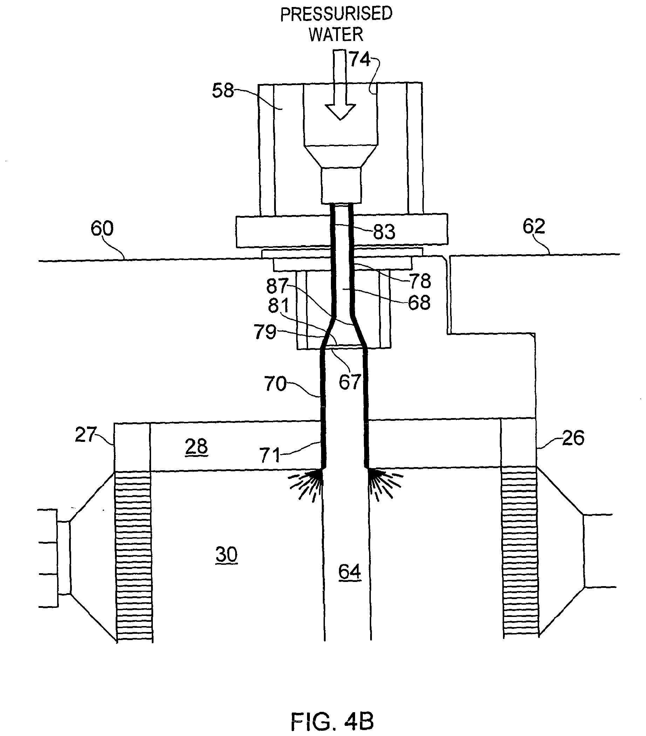

Figure 4B is an enlarged view of a part of Figure 4A provided to better illustrate the water injection process through the valve, the water injection path being indicated in bold. Only selected parts are labelled, such as the main body 60 and coupling piece 62. The above described features of the inlet hole 74 in the valve body 58 leading to the hole 78 are also labelled. As previously mentioned, the hole 78 has a flared lower portion 79 to receive a correspondingly shaped tappet 68. The tappet 68 has a lower surface 81 facing the pin upper surface 81 and a constant diameter stem portion 83 which is connected to the lower surface 81 by a flared portion 87 which faces the flared portion 79 of the tappet receiving hole 78.

The tappet 68 forms a valve by being arranged to have a limited vertical freedom of movement which allows the tappet 68 to lower slightly under action of pressure from the pressurised water line until the tappet's lower surface 81 abuts the upper surface 67 of the pin 64. When in this lowered position, the mutually facing tapered surfaces of tappet and receiving hole are separated by a small distance which allows pressurised water to flow from the pressure line via the inlet hole down the sides of the tappet stem between the surfaces 78 and 83, and then 79 and 87, and then onwards down a gap between the circumferential surface of the pin 64 and its accommodating bore 70, and then the circumferential surface of the pin 64 and the upper hole 71 in the collar spacer 28. At the lower end of the upper hole, the constricted flow path comes to an end, and the pressurised water is free to disperse into the mixing chamber 30 as schematically illustrated. The valve is thereby designed to release a shot of water rapidly, then stop within 1/100sec. The valve is referred to as a viscosity valve, since it does not allow melted polymer to bleed into the pressurised water feed line. As described below, the timing of each water injection event is synchronised with injection of a dose of polymer into the mixing chamber 30, the polymer entering into the mixing chamber 30 through the holes in the inlet disk 26, i.e. from the right in the figure.

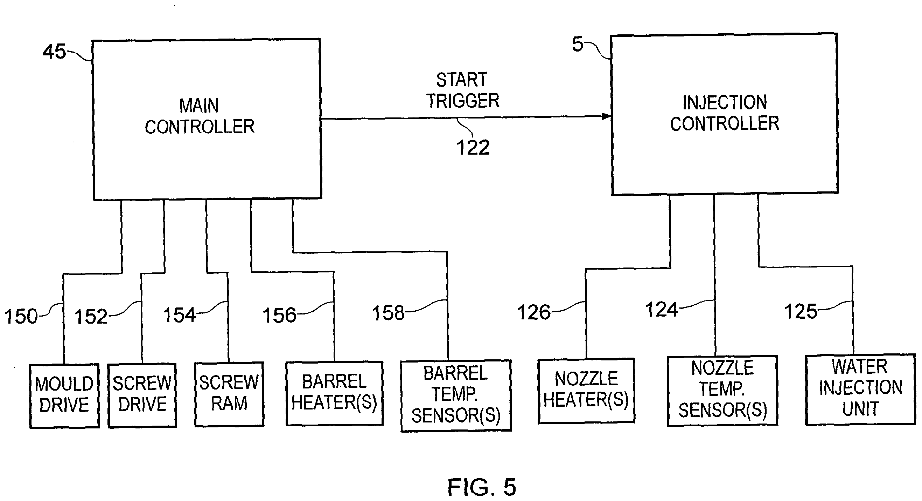

Figure 5 is a schematic drawing of the controllers and associated connections. The system has two controllers that operate almost independently. The moulding machine 2 has its own controller 45 which controls all conventional functions of the moulding system. The injection nozzle 50 and associated water supply unit 7 have their own controller 5 to control the water injection. The only connection needed between them is a communication line 122 for transmitting a start trigger signal from the main controller 45 to the injection controller 5. This is a standard output from the main controller available on an I/O line. The relative independence of the two controllers means that the special injection nozzle and associated control and water injection unit 5, 7 can be fitted to any standard moulding system without difficulty. In other words, it is a simple retrofit that does not require any system integration.

The injection controller 5 is connected to drive the electrical nozzle heater(s) via lines 126 as well as to receive temperature measurements from the nozzle temperature sensor(s) via lines 124, and also to control the water injection unit 5 via a communication line 125, with these controls including pump control, supply valve control and pressure sensing. The main controller 45 is connected to control the mould drive, the screw drive, the hydraulic ram drive and the various barrel heaters 108 via respective control lines 150, 152, 154 and 156. The main controller 45 is also connected to temperature sensors mounted along the barrel by communication lines 158.

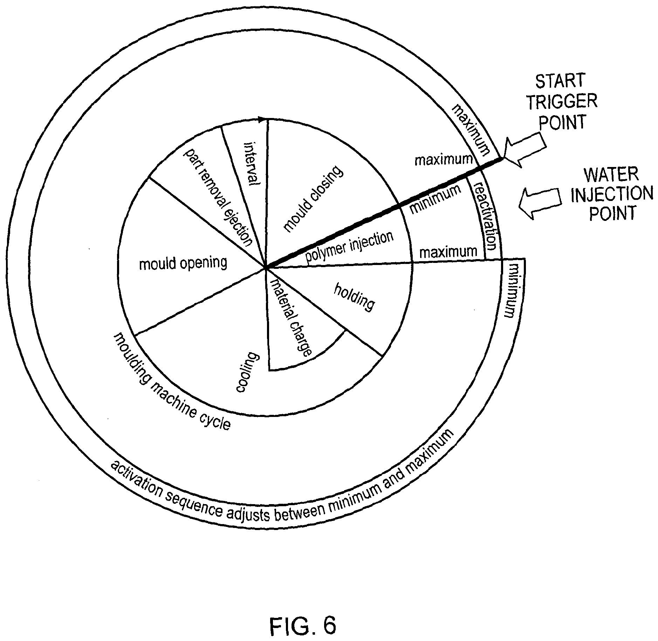

Figure 6 is a wheel diagram showing a complete injection moulding cycle according to the first embodiment. The start of the moulding cycle is indicated by the bold line extending at approximately 2 o'clock and is depicted as proceeding in clockwise fashion around the wheel. The moulding cycle is made up of the following phases from start to finish:
1. polymer injection during which polymer and foaming agent are forced into the nozzle chamber and mixed, whereafter the foamed polymer is ejected from the nozzle and injected into the mould;
2. holding during which an elevated pressure is maintained in the mould cavity;
3. charging the moulding machine with another dose of polymer ready for injection into the nozzle;
4. cooling the moulded part, the early part of which coincides with the charging
5. mould opening in which the two halves of the mould are separated
6. part removal by ejection of the moulded part from the mould
7. interval which is a dead period of waiting for part removal as demould
8. mould closing during which the two halves of the mould are closed together in preparation for the next injection moulding cycle.

During the polymer injection phase, a first arrow on the periphery of the wheel indicates the timing of a start trigger which is used by the injection controller as a timing signal from which the various actions associated with the water injection are referenced, and a second arrow indicates the timing of the water injection into the nozzle.

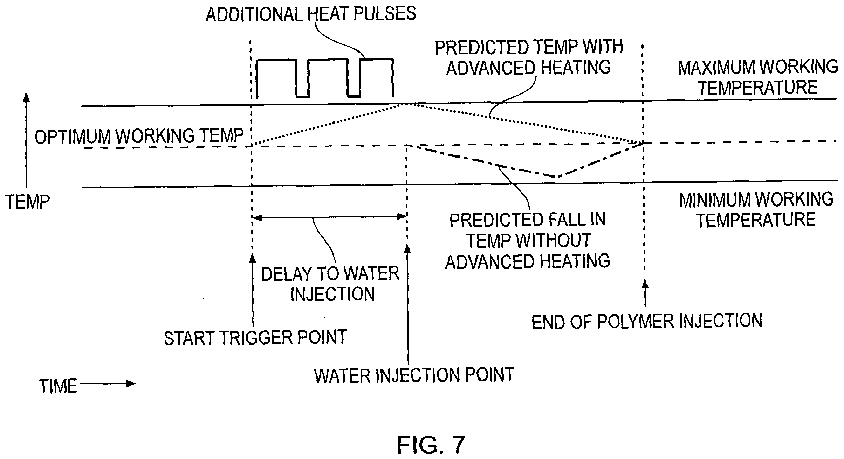

Figure 7 is a schematic graph-like drawing showing the polymer injection phase in more detail and specifically how polymer temperature is controlled during the polymer injection phase. Time is shown from left to right and temperature bottom to top.

For any given polymer, the manufacturer will specify an operating temperature range within which the polymer should be workable for moulding. The lower and upper bounds of the operating temperature range are referred to as the minimum and maximum working temperatures respectively. The operating temperature range for the polymer relates to the desired polymer temperature in the nozzle, i.e. as the polymer leaves the moulding machine. (A succession of temperature ranges extending to lower temperatures are usually also specified for the desired temperatures at each heating stage within the barrel of the moulding machine.) Within the manufacturer's specified operating temperature range the operator will have determined through a previous run an optimum working temperature for moulding with the particular system being used. In the figure, the optimum working temperature is shown near the midpoint of the operating temperature range, but this need not be the case.

First consider the situation when the moulding is conventional without foaming. The polymer charge that is delivered to the nozzle from the polymer charging chamber will have the optimum working temperature and the nozzle heaters will act to maintain the polymer at that temperature. The temperature over time during the injection phase will therefore remain constant as shown by the dashed line, and there are no technical difficulties in achieving that.

Next consider the situation if the polymer is foamed in a conventional method using the moulding machine and nozzle of the first embodiment. The polymer charge that is delivered to the nozzle from the polymer charging chamber will initially have the optimum working temperature. However, after the water injection point, i.e. when water foaming agent is injected into the nozzle, the temperature of the polymer will drop for a time, as depicted by the falling part of the dot-dash line despite the heating to the nozzle. Over time the nozzle heaters will counteract the fall in temperature caused by mixing, the temperature will then stabilize and recover to the optimum working temperature, as depicted by the rising part of the dot-dash line. Of course, the temperature profile will not be made up of a linear fall and rise - a linear profile is shown for illustration only. To give a specific example, water added to a heated chamber containing melted polymer at 230°C drops in temperature to around 170°C which can be a temperature only just above or lower than the minimum working temperature.

Finally the situation is described according to the first embodiment in which an additional amount of heat is applied to the nozzle before water injection to heat the polymer above its optimum working temperature in anticipation of the heat loss that will result from the water injection. Additional heat pulses are applied to the nozzle heating elements between the start trigger point and the water injection point. In the figure, the pulses are shown as being square wave pulses. Other pulse shapes may be applied, such as sawtooth pulses. Moreover, the additional heat may be applied in a continuous way, i.e. not with pulses. For example, water added to a heated chamber containing activated polymer at say 290°C will drop in temperature to around 230°C which is the optimum working temperature for processing.

The start trigger point is defined by the timing of a signal that the injection controller receives from the main controller, which for example may be a signal output by a sensor in the mould which indicates the parts of the mould coming into a closure position. The water injection controller 5 purposely delays water injection for a period of time to synchronize the timing of the polymer injection from the moulding machine and the water injection into the nozzle for best effect. Specifically, varying the relative timing of water injection and polymer injection into the nozzle allows optimisation of how the foam/froth reaction takes place when the water is sprayed onto the polymer melt streams emerging from the inlet-side forming disk 26.

At the water injection point, the polymer temperature has been increased in anticipation of the heat loss to follow. In the figure, the polymer temperature at the water injection point is shown as being just below the maximum working temperature. However, it is possible for the polymer temperature to exceed the maximum working temperature. Specifically, our tests show that the polymer manufacturer's maximum working temperature can be slightly exceeded without problems for these short durations, e.g. exceeded by 10, 20, 30 or 40°C. After water injection, the polymer temperature drops in a similar way to a conventional process as a result of the heat loss. However, the polymer temperature is dropping from a higher level towards the optimum working temperature which is attained at the end of the polymer injection phase.

It will also be understood that, given the limited heating capacity of any particular set of nozzle heaters, and given the normal variations in the quantity of the additional heat needed which are affected by part size (i.e. mass of polymer per part), polymer operating temperature and so forth, the amount of time needed to apply the pre-heating may vary quite widely from part to part. Consequently, in practice, the operator will set the length of the delay time between the trigger point and the water injection point so that it is sufficiently long (but not unnecessarily long) to achieve the desired pre-heating. This process configuration flexibility is in part enabled by the extremely rapid pressured injection of water (or other liquid foaming agent) which can take place in a few hundredths of a second with the described equipment. Injection of foaming agent is thus effectively an instantaneous event in the polymer injection phase of the cycle.

In any case, the additional amount of heat is preferably applied so as to ensure that the polymer in the nozzle is maintained above the bottom of its operating temperature range throughout. The operating temperature range is that specified by the polymer manufacturer, or the equivalent temperature range determined on the actual moulding machine by the operator during set up.

As a safety feature, the injection controller 5 senses the operating state of the moulding machine, specifically whether it is active or idle. If moulding machine actuation is sensed the injection controller switches to actuation mode. On the other hand, if the moulding machine stops, the injection controller 5 senses this and switches to a non-operating idle mode during which conventional control of temperature is carried out to prevent degradation of polymer material during standstill.

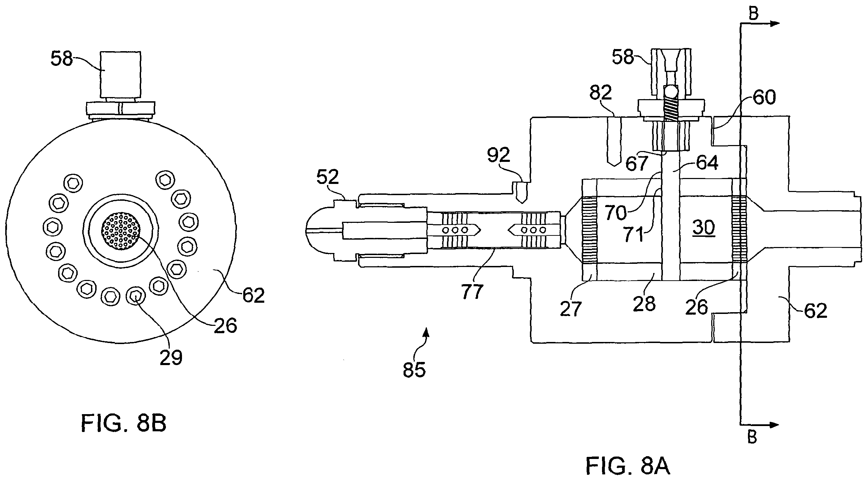

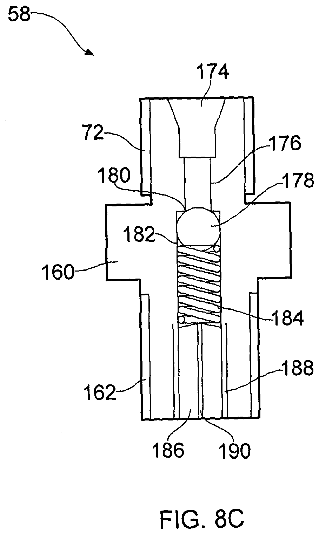

Figure 8A is an axial section of an alternative embodiment. The alternative embodiment is the same as the design of Figure 4A, differing only in the valve unit design. In Figure 8A, the heating elements are also not shown, but are provided. The same reference numerals are used for corresponding parts. Further detailed description of Figure 8A is therefore omitted, the valve unit design being described below with reference to Figure 8C.

Figure 8B is a section B-B through Figure 8A. It shows the array of through holes in the forming disk 26 as well as the bolts 29 used to bolt the coupling piece 62 to the nozzle main body 60. It is noted that Figure 8B would also be an accurate drawing of the same through Figure 4A.

Figure 8C is an enlarged cross-section through the valve unit of Figure 8A. The valve unit 58 may be directly exchanged for the valve unit of Figure 4A. The valve unit 58 screws into the nozzle main body by thread 162. A pressure line can be fitted by screwing it onto thread 72 and forms a seal via the hydraulic fitting flange 160. A pressurised water inlet path 174 tapers down to a uniform diameter bore 176 which then steps out to a larger diameter bore 182. A ball bearing 178 is seated on the rim 180 formed by the lower end of the bore 176. The rim is chamfered to provide an area of contact with the ball bearing, rather than a line of contact, i.e. a valve seat. The bore 182 is dimensioned to allow the ball bearing to slide in it. The ball bearing is urged into its seat by a helical spring 184 which is pre-loaded in compression by a grub screw threaded into a lower threaded portion 188 of the bore 182. The bias spring 184 is thus both pre-loaded and captured by the grub screw 186. The grub screw 188 is provided with a through hole 190. The valve is thus a ball valve designed to open when the force on the ball caused by pressure on the inlet side exceeds an opposed biasing force applied by the bias spring acting to keep the ball sealed against the valve seat.

In this design, when the valve is open a constricted flow path for water (or another liquid foaming agent) is provided by several of the design elements. The flow path is initially constricted by the separation between the ball and the valve seat. However, this separation is not closely controllable, since its amount of opening depends on the instantaneous pressure on the inlet side. The flow path is then constricted downstream of the valve seat by the pinch between the inner surface of the bore 182 and the equatorial outer surface of the ball 178. At the operating temperature, the difference between the radius of the ball bearing and the radius of the bore 182 is preferably between 0.01 mm and 0.03 mm, so that the cross-sectional dimension of the flow path at this point is between 0.01 mm and 0.03 mm. A further constriction is then provided by the grub screw's through hole 190 which is preferably dimensioned to have a diameter between 0.01 mm and 0.03 mm.

Referring back to Figure 8A, on exiting the through hole 186, the flow is further constricted by the gap between the head of the grub screw and the top surface 67 of the collar retaining pin 64, and then by the gap formed between the circumferential surface of the pin 64 and its accommodating bore 70, and then the circumferential surface of the pin 64 and the upper hole 71 in the collar 28. At the lower end of the upper hole 71, the constricted flow path comes to an end, and the pressurised water is free to disperse into the mixing chamber 30.

An overall description of the system in use is now provided.

Pressurised water is inserted as a timely dose into the nozzle. It is possible to deliver mains or tap water or other liquid at extremely high pressure in very little time. In fact the water insertion event can take place over as little as 0.04 seconds. The water injection event is adjustable to match polymer shot size, or other processing requirements. The control processing is extremely fast, and is generally much faster than the moulding machine's operational process. The injection controller takes a trigger from the processing cycle, for example the injection start signal. Because the injection control is extremely fast, a delay can be created before the water injection. This delay time is utilised by the injection controller as delay time before the water injection event and is adjustable. By example the control system can insert tap water at up to 420 bar for 0.01 seconds. The water injection can be carried out during machine cycle and in many examples before the moulding machine injects the polymer into the nozzle. During injection, the water foaming nozzle receives a charge of melted polymer from the screw plunger. The charge of polymer is forced through the first melt stream forming disk and is formed into miniature melt streams. At the same time, water is delivered into the mixing chamber. The water and polymer make contact and start reacting. During the reaction, the polymer spontaneously expands, which draws latent heat energy from the melt and its surroundings, which if uncontrolled could result in partial solidification of the mixture. This is where activation and reactivation is used. Activation and reactivation compensates for heat energy loss prior to heat energy spend, predicting and calculating the heat energy needed for best expansion and foaming. Activation and reactivation of the melted polymer mixture is precisely monitored and controlled for accuracy and consistency. The injection control system repeatedly checks to see if the machine is running and how fast the machine is cycling and how much water is inserted into the mixture. If the nozzle temperature or mixture throughput rises or falls, the injection controller acting as a closed loop compensates in advance for either gain or loss of heat energy.

The advance compensation is performed as follows. The first cycle or shot of polymer material is sacrificial. The activation and reactivation for the first cycle has a preset, yet adjustable level. The processor delivers the preset amount of additional heat for the first cycle and records the information for the next cycle, using it within the control loop.

The active reactivated melt water mixture is fed through the outlet-side melt stream forming disk, generating a more compressive mixture, which is then fed through the static mixer for further compressive agitation before release into the mould or cavity. This all happens within the moulding machine's injection cycle and reaction is extremely fast, taking approximately half a second in one example. Depending upon the injection moulding machine used and length of holding time, this may vary.

Activation and reactivation is now described. With, for example, a nozzle temperature of 250°C and with say polystyrene being moulded, the injection machine is started. The control system notices that the moulding machine is moving, this information being gained from the moulding machine's logic trigger. The injection controller inserts the water into the nozzle at the desired time and the injection controller detects the drop in nozzle temperature when the water is added and as the water absorbs melted polymer heat energy. For example, the temperature drop may be 60°C during this transfer of energy, thereby dropping the mixture's temperature to 190°C. Without activation and reactivation, the next cycle could likely cause equipment damage. For example, the nozzle temperature could drop a further 60°C to 130°C, solidifying the melt mixture and blocking the nozzle.

Activation and reactivation is performed by the injection controller activating the melt and mixture to an elevated energy level and temperature, in some cases higher than the manufacturer's maximum recommended operating temperature. The addition of the water as a foaming agent rapidly absorbs the additional heat energy, which then lowers the activated melt and mixture temperature to a reactivated temperature which is within the manufacturer's recommended operating temperature range and preferably close to the optimum for the process. The mixture of melted polymer and water will also convert the additional amount of heat energy into increased pressure in the nozzle, thereby aiding the expansion and reaction. The injection controller has a logic control that checks the machine and nozzle status many times a second, for example 10 times per second. The process control is continually updated to keep the activation temperature in tune with reactivation needs. Should the moulding machine stop for any reason, the control system detects it has stopped and the activation reactivation is stopped and the machine returns to standard temperature control until restart so that the polymer which is left in the moulding machine does not degrade into oil and gas which would be potentially hazardous.

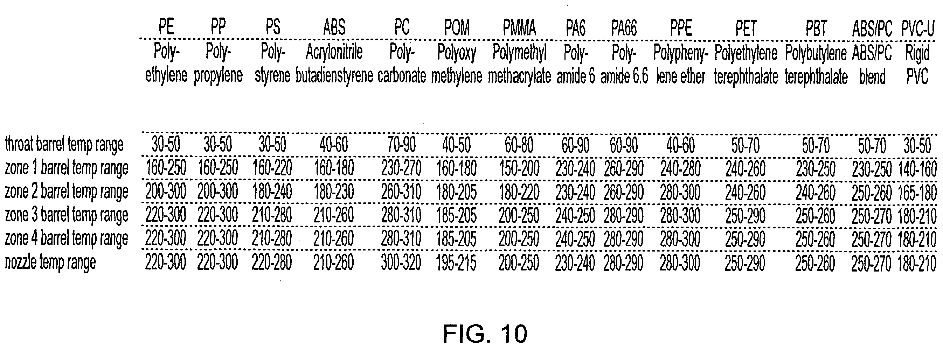

Figure 10 is a table of some suitable polymers and their specified operating temperature ranges. The operating temperature ranges are specified at various points in the moulding machine, from the throat of the barrel, i.e. where the polymer granules enter the barrel from the hopper, through 4 zones of increasing temperature along the barrel and finally in the nozzle.

It will be understood that the delay time between the trigger point and the water injection point can be varied by the injection controller. Activation is also an operator-adjustable event within maximum and minimum limits. The maximum limit is determined by the moulding machine cycle time. A shorter cycle time requires a more aggressive activation. A longer or continuous cycle time (for extrusion) requires a less aggressive activation. Other factors will also affect the desired parameter settings such as production part size (material shot size), material type and mould cooling speed. These configuration changes can be made by an operator using the injection controller's man-machine interface.

The injection control system and nozzle may be retro-fitted to a new or used moulding machine, or may become an integral part of a moulding machine if it is desired to be integrated by a moulding machine manufacturer.

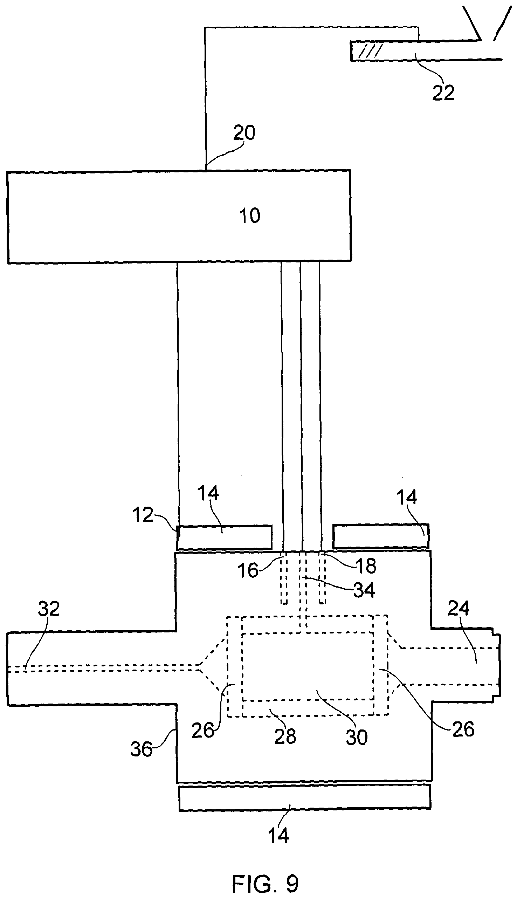

Figure 9 shows schematically an activating apparatus comprises a temperature control system 10 with supply and controlling means. Electrical heating element 14 heats chamber 30. During machine idle, the thermocouple 16 and temperature control 10 are set to non-processing temperatures as recommended by the polymer manufacturers. During machine processing the apparatus recognises a machine working signal via machine link 20 from the moulding machine 22, and activates the heating element 14 monitored by thermocouple 18 and its control. Thermocouple control 18 is set at an increased temperature and is able to override thermocouple control 16 during processing. The reason to activate polymer temperatures beyond manufacturers recommended limits during machine processing is for additional heat energy for the activation and reactivation of melted polymer. During machine processing, polymer throughput and higher heat collection is constantly monitored between 18 - 10 - 20 and for that reason no break down of polymer takes place. Importantly, when the machine is not processing or is idle, the apparatus reverts to control 16- 10 - 20 and the polymer temperatures revert to the temperatures recommended by polymer manufacturers.

A method of producing activated expanded polymer in and from the chamber 30 illustrated, is to take the moulding machine extruder 22 out of idle mode, by starting the machine. Once started, the triggering signal 20 connected from controller 10 recognises machine movement and operation, and transfers from non-processing temperature control mode, which is set at optimum temperatures recommended by polymer manufacturer or suchlike to processing control temperatures providing activating temperatures for the polymer. The machine is now processing at higher temperatures or activated temperatures that are higher than idle temperatures for an intensified reaction.

For example, when a nozzle or die head 36 is attached to machine 22, melted polymer is fed from machine 22 to chamber 30 having an entrance 24, forming means 26, and spacer 28, and an exit 32 at least one heating element 14, and at least one non-processing thermocouple 16, and at least one activating thermocouple 18 and at least one forming means 26 which directs polymer towards and/or from the heated chamber 30.

However, if required, a lower temperature expanding agent may be added to the heating chamber 30 containing activated melted polymer. The addition of lower temperature expanding agent as water is achieved in various ways along supply line 34 and controlled from controller 10, whereby upon delivery the reaction and expansion of the activated polymer is increased within the chamber 30 and consequently will drop the polymer temperature. However, activated polymer, having higher heat energy can compensate for heat energy loss so the mixture remains active and runny. The controller 10 is able to provide the required temperatures needed for full reaction of heat activated polymer and lower temperature expanding agent as mixture and which is released from within a heated nozzle and die head through exit 32 by means of the machine 22 screw movement. This operation may be continuous or not and because during processing the activated polymer has less time and distance to become overheated, the polymer will not degrade. It is perceived that apparatus may be applied to barrel heating in addition to nozzle or die head heating.

Accordingly, a lower temperature expanding agent applied to the activated polymer also suppresses degradation while cooling the expanding activated polymer. The lower temperature expanding agent applied to the activated polymer absorbs heat from the activated polymer, converting rapidly into a more reactional state i.e. water becomes steam or a liquid becomes gas. This change of state often uses large amounts of latent heat energy, and the present embodiment offers an apparatus that compensates for heat energy losses and allows the lower temperature expanding agent to reactionally expand with the polymer and exert pressure upon or within the heated chamber containing activated mixtures and particularly effective over shorter distances like within a nozzle or die head attached to a barrel and screw. The forces produced are used to reduce machine pressures and therefore lower the energy spent during forming and exit from the chamber.

Conversely, without activated polymer and with the addition of a lower temperature expanding agent like water added, the solidifying process is accelerated. This creates polymer cooling difficulties before completion of the expanded product. The absorption of heat from the melted polymer to the water is noticeable, particularly over short distances or events, and melted polymer at manufacturers recommended temperatures becomes viscous and difficult to blend and expand.

To give a specific example, water added to a heated chamber containing melted polymer at 230°c will drop in temperature to around 170°c and often this is a temperature lower than the polymer processing temperature. Water added to a heated chamber containing activated polymer at say 290°c will drop in temperature to around 230°c and often this is the optimum required temperature for processing.

Further aspects and embodiments are now described.

According to one aspect there is provided a control apparatus for activating melted polymer to higher heat level comprising, a control means for monitoring the machine and a control means of activating melted polymer. The control means provides a method for activating melted polymer during intervallic or constant processing of polymer. The control apparatus comprises steps for activating polymer to higher heat levels prior to the heat energy spend, and steps for activating polymer prior to and/or during expansion. The control apparatus also has a means of recognising machine stop or idle and machine running or producing, and provide steps to monitor heat energy losses and has the ability to predict the heat energy compensation required for activating the mixture during reaction and expansion. As a result, when activated polymer is inserted into a nozzle or die head, the melted polymer has a more mobile condition and creates activated melted polymer that reacts at a more highly mobile state with increased energy during processing.

According to another aspect there is provided a control apparatus for reactivating melted polymer to a higher heat level comprising a nozzle or die head, a control means for monitoring the machine and a control means for activating melted polymer within the nozzle or die head. This includes a control means for reactivating melted polymer within a nozzle or die head should a lower temperature expanding agent be added. Upon contact, absorption of heat energy occurs and activated melted mixture heat energy is absorbed, so that the mixture remains active and in a more highly mobile condition.
The term "melted polymer" as used herein in connection with the above-mentioned further aspects and embodiments of the invention is intended to cover any such polymer materials that can be supplied as man made or natural and includes rubbers thermoplastics and thermosetting materials or combinations.

The term "lower temperature expanding agent" as used herein in connection with the above-mentioned further aspects and embodiments of the invention is intended to cover water but may include other substances.

In one form of polymer activation, the apparatus increases melted polymer temperature during processing to improve its reactional ability in order to create foam without using an expanding agent or using a smaller than normal amount. In another form of polymer activation, the control apparatus increases melted polymer temperature to improve reactivation when water is added, for expanding the activated polymer mixture, maintaining temperatures of the mixture during processing.

The additional heat is applied to the molten plastics material during processing and the control apparatus activates or reactivates the melted polymer. It does this by having the ability to operate at a higher heat level during processing and also the ability to measure heat lost during expansion. Having this control information, the apparatus can predict and apply the heat gain required to replace the lost heat energy during expansion and/or the addition of a lower temperature expanding agent during processing. If required, the apparatus can predict and gain more heat than is lost through reactional heat energy.

To offer additional heat energy before heat energy loss or heat energy spend, requires prior information and the control apparatus is able to monitor the heat energy loss within the melted polymer and it's surroundings and activate the melted polymer to a higher temperature, prior to heat energy loss, thereby covering the heat energy loss .

In use, the first melted polymer expansion can be considered as the learning event. The control apparatus recognises the heat energy used or spent, and then gains heat energy for use within the second expansion event and so on. In this way the apparatus can continue to control and predict from the prior expansion event as heat energy losses occur, and then actively increase the temperature for the subsequent event. The compensational effect may take several expansion events before the required heat levels are achieved. The expansion event is dependant upon the type of heating used, the type of polymer being activated and the type of lower temperature expanding agent being added and the apparatus may be altered to control all relevant circumstances. It is envisaged that the apparatus will activate polymers with many heating methods including high watt electrical elements, induction or suchlike.

The control apparatus for activating polymers is made possible by the addition of at least one secondary control. For example, control one is monitoring the machine during idle, while machine is not in use. In this instance, it continues to hold the temperatures at an optimum temperature recommended by the polymer manufacturer. However, during processing a secondary control takes over, monitoring the temperatures of the melted polymer and increasing the temperatures of the melted polymer to activation or reactivation temperatures. The temperature of the activated polymer is controlled by the apparatus and the apparatus monitors the machine operation so that when the machine stops, is idle or switched off, the apparatus reverts to control one which holds the temperatures at those recommended by the polymer manufacturer. When this occurs, the activated temperature is lowered to the temperature recommended by the polymer manufacturer and the polymer remains intact, without break down or degradation.
The ability to switch from activated temperatures to manufacturers recommended temperatures is necessary because activated polymer without movement or throughput would quickly degrade or break down into dangerous substances. The control system of the apparatus can be specified in several ways, such as using thermocouples or program control or others that allows control of two or more different polymer temperature levels during processing and/or idle or stop.
For practical purposes the apparatus preferably includes a delivery system for the lower temperature expanding agent as water that is applied to the activated melted polymer within a nozzle or die head and has a delivery system that preferably includes a pump, an accumulator, a valve and timers whereby delivery pressure and timing can be controlled to correspond with polymer injection or continuous use.

Further aspects and features are now disclosed with reference to the numbered clauses below.
1. A method for activating and reactivating melted polymer comprising steps of inserting the melted polymer into a heated nozzle or die head having an entrance and an exit and during machine stop or screw idle having control of processing temperatures at optimum, as recommended by the polymer manufacturer, then additionally during machine processing and/or barrel screw motion, having an apparatus for controlling and activating melted polymer to increased levels of heat energy, overriding optimum temperatures to enable additional reaction within the polymer.
2. A method as specified in clause 1, wherein the application includes a control apparatus for activating melted polymer before, during and following the addition of a substance at a lower temperature than the melted polymer, like water, and as a mixture remains mobile because of activation of the melted polymer, and upon exit expands reactively to create porous or non porous structures.
3. A method as specified in clause 1, wherein the application includes a control apparatus for activating melted polymer before during and following the addition of water and as a mixture remains mobile since activation compensates for heat loss, then upon exit the mixture expands reactively to create interconnecting structures
4. A method as specified in clause 1, 2 or 3, wherein the additional heat energy applied to melted polymers for activation is electrical energy form.
5. A method as specified in clause 1, 2 or 3, wherein the additional heat energy applied to melted polymers for activation is in combustible gas energy form.
6. A method as specified in clause 1, 2 or 3, wherein the additional heat energy applied to melted polymers for activation is in induction or microwave energy forms.
7. A method as specified in clause 1, 2, 3, 4, 5 or 6, wherein the additional heat energy applied to the polymer is in advance of heat loss and is used for the reactivation of melted polymers when a cooler substance is added.
8. Apparatus for controlling and activating melted polymer to a higher animated condition, comprising heating and controlling means to override the existing heating and controlling means, and including connection to a machine providing a means of signal controlling.
9. Apparatus as specified in clause 8 comprising heated nozzle or die head with a means for advancing the additional heat energy to achieve earlier activation of melted polymer providing prior activation through heat energy replenishment, useful during rapid heat loss and during the production of foamed or expanded polymer within short distances.
10. Apparatus as specified in clauses 8 or 9, wherein water is added to the melted polymer and heat energy loss occurs and said losses are monitored and furthermore, information is used to predict required reactivation of the melted polymer in advance of heat lost.
11. Apparatus as specified in clause 10, wherein melted polymer with the addition of lower temperature substance and wherein, previous intense heat is able to reactivate the polymer mixture immediately, during and after expansion.
12. Apparatus as specified in any one of clauses 8 to 11, wherein the addition of a lower temperature substance has a lower temperature than the natural or man made polymer.
13. Apparatus as specified in clause 12, wherein the liquid substance is liquid water at normal temperature and/or at atmospheric pressure.
14. Apparatus as specified in any one of clauses 8 to 13, including a controlling and delivery system for additional heat energy.
15. Apparatus as specified in clause 14, wherein the delivery system communicates with the machine and includes control of a delivery pump and a valve, and where delivery pressure and timings are controllable.
16. Apparatus as specified in any one of clauses 8 to 15, wherein the nozzle or die head is connected to a machine forming polymer.

There has thus been described a method and apparatus for controlling processing temperatures and the activation of polymer by way of machine to control, and control to machine signalling, that allows heat energy compensation for polymer heat energy loss. This is useful when a lower temperature substance, like water is added to expand natural or man made polymers within short distances like that of a nozzle and die head.

## Claims

1. A system (2) for injection moulding of polymer parts, the system comprising:
a polymer melting stage (100) operable to melt polymer input thereto;
a nozzle (50) arranged to receive melted polymer from the polymer melting stage, the nozzle having a body (60) defining a mixing chamber (30), an injector (58) arranged to inject a liquid foaming agent into the mixing chamber and a heating element (80) actuatable to apply heat to the mixing chamber to maintain polymer therein at a temperature within the polymer's operating temperature range;
a mould (8) arranged to receive foamed polymer from the nozzle; **characterized in that** the system further comprises
a controller (5) configured to control the cyclical operation of the system to mould polymer parts such that in each moulding cycle, the controller is operable to cause injection of a dose of foaming agent and a dose of polymer into the mixing chamber and to cause actuation of the heating element to supply an additional amount of heat to compensate for heat loss resulting from mixing of the foaming agent with the polymer, wherein the controller is configured such that the additional amount of heat is applied at least in part before the start of mixing in anticipation of the heat loss, wherein the controller is configured such that, after the first cycle, the controller sets the additional amount of heat adaptively with reference to a measurement of mixing-induced heat loss during the previous cycle.

2. The system of claim 1, wherein the controller is configured such that, for the first cycle, the controller sets the additional amount of heat to a pre-set value.

3. The system of claim 1 or 2, the nozzle further includes a temperature sensor (84) located to measure mixing chamber temperature and connected to the controller, and wherein the controller is configured such that, after the first cycle, the measurement of mixing-induced heat loss is based on changes in temperature in the nozzle as measured by the temperature sensor.

4. A method for injection moulding of polymer parts, the method comprising cyclical iteration of the following steps:
closing a mould (8);
supplying a dose of a melted polymer and a dose of a liquid foaming agent into a nozzle (50) to cause mixing of the polymer and foaming agent and thereby foam the polymer;
applying an additional amount of heat to the nozzle to compensate for heat loss resulting from the mixing and foaming;
injecting the foamed polymer from the nozzle into the mould; and
opening the mould and ejecting the polymer part, wherein the additional amount of heat is applied at least in part before the start of mixing in anticipation of the heat loss, **characterized in that**, after the first cycle, the additional amount of heat is set adaptively with reference to a measurement of mixing-induced heat loss during the previous cycle.

5. The method of claim 4, wherein, for the first cycle, the additional amount of heat has a pre-set value.

6. The method of claim 4 or 5, wherein, after the first cycle, the measurement of mixing-induced heat loss is based on measured changes in temperature in the nozzle.

7. The method of any of claims 4 to 6, wherein the liquid foaming agent is water.

8. The method of any one of claims 4 to 7, wherein the additional amount of heat is delivered such that, before and/or during mixing, the polymer's temperature in the nozzle is transiently elevated above the temperature it has during the remainder of the cycle.

9. The method of any one of claims 4 to 8, wherein the additional amount of heat is applied so as to ensure that the polymer in the nozzle is maintained above the bottom of the polymer's operating temperature range throughout.

## Patentansprüche

1. System (2) zum Spritzguss von Polymerteilen, wobei das System umfasst:
eine Polymerschmelzstufe (100), die funktionsfähig ist, dazu zugeführtes Polymer zu schmelzen;
eine Düse (50), die dafür gestaltet ist, geschmolzenes Polymer von der Polymerschmelzstufe zu erhalten, wobei die Düse einen Körper (60), der eine Mischkammer (30) definiert, einen Injektor (58), der zum Einspritzen eines flüssigen Schäummittels in die Mischkammer gestaltet ist, und ein Heizelement (80), das betätigbar ist, um der Mischkammer Wärme zuzuführen und Polymer darin bei einer Temperatur innerhalb des Arbeitstemperaturbereichs des Polymers zu halten, umfasst;
eine Gussform (8), die dafür gestaltet ist, geschäumtes Polymer von der Düse zu erhalten;
**dadurch gekennzeichnet, dass** das System ferner umfasst:
eine Steuereinheit (5), die dafür gestaltet ist, den zyklischen Betrieb des Systems zum Formen von Polymerteilen zu steuern, wobei die Steuereinheit funktionsfähig ist, bei jedem Formzyklus Einspritzen einer Dosis Schäummittel und einer Dosis Polymer in die Mischkammer zu bewirken und Betätigung des Heizelements zu bewirken, um eine zusätzliche Wärmemenge zuzuführen, um Wärmeverlust als Folge des Mischens des Schäummittels mit dem Polymer auszugleichen, wobei die Steuereinheit so gestaltet ist, dass die zusätzliche Wärmemenge wenigstens teilweise vor dem Beginn des Mischens in Erwartung des Wärmeverlusts zugeführt wird, wobei die Steuereinheit so gestaltet ist, dass nach dem ersten Zyklus die Steuereinheit die zusätzliche Wärmemenge unter Verwendung einer Messung von mischinduziertem Wärmeverlust während des vorhergehenden Zyklus adaptiv einstellt.

2. System gemäß Anspruch 1, wobei die Steuereinheit so gestaltet ist, dass die Steuereinheit für den ersten Zyklus die zusätzliche Wärmemenge auf einen voreingestellten Wert einstellt.

3. System gemäß Anspruch 1 oder 2, wobei die Düse ferner einen Temperatursensor (84) enthält, der angeordnet ist, um die Temperatur der Mischkammer zu messen, und mit der Steuereinheit verbunden ist, und wobei die Steuereinheit so gestaltet ist, dass nach dem ersten Zyklus die Messung des mischinduzierten Wärmeverlusts auf der Grundlage von Temperaturveränderungen in der Düse, wie gemessen durch den Temperatursensor, steht.

4. Verfahren zum Spritzguss von Polymerteilen, wobei das Verfahren zyklische Iteration der folgenden Schritte umfasst:
Schließen einer Gussform (8);
Zuführen einer Dosis eines geschmolzenen Polymers und einer Dosis eines flüssigen Schäummittels in eine Düse (50), um Mischen des Polymers und des Schäummittels und dadurch Schäumen des Polymers zu bewirken;
Zuführen einer zusätzlichen Wärmemenge zu der Düse, um Wärmeverlust als Folge des Mischens und Schäumens auszugleichen;
Einspritzen des geschäumten Polymers von der Düse in die Gussform; und
Öffnen der Gussform und Ausstoßen des Polymerteils, wobei die zusätzliche Wärmemenge wenigstens teilweise vor dem Beginn des Mischens in Erwartung des Wärmeverlusts zugeführt wird,
**dadurch gekennzeichnet, dass**
nach dem ersten Zyklus die zusätzliche Wärmemenge unter Verwendung einer Messung von mischinduziertem Wärmeverlust während des vorhergehenden Zyklus adaptiv einstellt wird.

5. Verfahren gemäß Anspruch 4, wobei für den ersten Zyklus die zusätzliche Wärmemenge einen voreingestellten Wert aufweist.

6. Verfahren gemäß Anspruch 4 oder 5, wobei nach dem ersten Zyklus die Messung von mischinduziertem Wärmeverlust auf der Grundlage von gemessenen Temperaturveränderungen in der Düse steht.

7. Verfahren gemäß einem der Ansprüche 4 bis 6, wobei der flüssige Schäummittel Wasser ist.

8. Verfahren gemäß einem der Ansprüche 4 bis 7, wobei die zusätzliche Wärmemenge so zugeführt wird, dass vor und/oder während des Mischens die Temperatur des Polymers in der Düse vorübergehend über die Temperatur erhöht wird, die es während des Rests des Zyklus aufweist.

9. Verfahren gemäß einem der Ansprüche 4 bis 8, wobei die zusätzliche Wärmemenge zugeführt wird, um zu gewährleisten, dass das Polymer in der Düse vollständig über der Untergrenze des Arbeitstemperaturbereichs des Polymers gehalten wird.

## Revendications

1. Système (2) pour le moulage par injection de pièces en polymère, le système comprenant :
un étage de fusion de polymère (100) pouvant fonctionner pour faire fondre du polymère amené à y entrer ;
une buse (50) conçue pour recevoir du polymère fondu provenant de l'étage de fusion de polymère, la buse ayant un corps (60) délimitant une chambre de mélange (30), un injecteur (58) conçu pour injecter un agent moussant liquide dans la chambre de mélange et un élément chauffant (80) pouvant être actionné pour appliquer de la chaleur à la chambre de mélange pour y maintenir le polymère à une température dans la plage de température de fonctionnement du polymère ;
un moule (8) conçu pour recevoir du polymère en mousse provenant de la buse ;
**caractérisé en ce que** le système comprend en outre
un dispositif de commande (5) configuré pour commander le fonctionnement cyclique du système pour mouler des pièces en polymère de façon telle que dans chaque cycle de moulage, le dispositif de commande peut être amené à fonctionner pour provoquer l'injection d'une dose d'agent moussant et d'une dose de polymère dans la chambre de mélange et pour provoquer l'actionnement de l'élément chauffant pour fournir une quantité supplémentaire de chaleur pour compenser la perte de chaleur résultant du mélange de l'agent moussant avec le polymère, dans lequel le dispositif de commande est configuré de façon telle que la quantité supplémentaire de chaleur est appliquée au moins en partie avant le début du mélange en anticipation de la perte de chaleur, dans lequel le dispositif de commande est configuré de façon telle que, après le premier cycle, le dispositif de commande règle la quantité supplémentaire de chaleur de manière adaptative par référence à une mesure de perte de chaleur induite par le mélange pendant le cycle précédent.

2. Système selon la revendication 1, dans lequel le dispositif de commande est configuré de façon telle que, pour le premier cycle, le dispositif de commande règle la quantité supplémentaire de chaleur à une valeur préréglée.

3. Système selon la revendication 1 ou 2, dans lequel la buse comprend en outre une sonde de température (84) située pour mesurer la température de la chambre de mélange et connectée au dispositif de commande et dans lequel le dispositif de commande est configuré de façon telle que, après le premier cycle, la mesure de perte de chaleur induite par le mélange est basée sur des changements de température dans la buse tels que mesurés par la sonde de température.

4. Procédé pour le moulage par injection de pièces en polymère, le procédé comprenant l'itération cyclique des étapes suivantes :
la fermeture d'un moule (8) ;
l'apport d'une dose d'un polymère fondu et d'une dose d'un agent moussant liquide à une buse (50) pour provoquer le mélange du polymère et de l'agent moussant et de cette manière faire mousser le polymère ;
l'application d'une quantité supplémentaire de chaleur à la buse pour compenser la perte de chaleur résultant du mélange et du moussage ;
l'injection du polymère en mousse à partir de la buse dans le moule ; et
l'ouverture du moule et l'éjection de la pièce en polymère, dans lequel la quantité supplémentaire de chaleur est appliquée au moins en partie avant le début du mélange en anticipation de la perte de chaleur,
**caractérisé en ce que**, après le premier cycle, la quantité supplémentaire de chaleur est réglée de manière adaptative par référence à une mesure de perte de chaleur induite par le mélange pendant le cycle précédent.

5. Procédé selon la revendication 4, dans lequel, pour le premier cycle, la quantité supplémentaire de chaleur a une valeur préréglée.

6. Procédé selon la revendication 4 ou 5, dans lequel, après le premier cycle, la mesure de perte de chaleur induite par le mélange est basée sur des changements mesurés de température dans la buse.

7. Procédé selon l'une quelconque des revendications 4 à 6, dans lequel l'agent moussant liquide est l'eau.

8. Procédé selon l'une quelconque des revendications 4 à 7, dans lequel la quantité supplémentaire de chaleur est fournie de façon telle que, avant et/ou pendant le mélange, la température du polymère dans la buse est transitoirement élevée au-dessus de la température qu'il a pendant le reste du cycle.

9. Procédé selon l'une quelconque des revendications 4 à 8, dans lequel la quantité supplémentaire de chaleur est appliquée de manière à garantir que le polymère présent dans la buse est tout le temps maintenu au-dessus de la température limite inférieure de la plage de température de fonctionnement du polymère.
